# EUROPEAN PATENT APPLICATION

(11) **EP 4 783 019 A1**
(43) Date of publication of application: **29.07.2026**
(21) Application number: 24868159.5
(22) Date of filing: 09.09.2024
(51) Int. Cl.: G06F 15/173, G06F 17/10

(54) **ARITHMETIC DEVICE AND DATA MOVEMENT METHOD**

(30) Priority: 21.09.2023 JP 2023154064
(71) Applicant: DENSO CORPORATION, Kariya-city, Aichi-pref. 448-8661 (JP)
(72) Inventor: KOSAKI Masanori, Kariya-city, Aichi-pref., 448-8661 (JP)
(74) Representative: Winter, Brandl - Partnerschaft mbB
(86) International application number: PCT/JP2024/032212
(87) International publication number: WO 2025/063081

(57) **Abstract**

In an arithmetic device (10), an arrangement of multiple virtual PEs (12B) is set such that at least one of row arrangement or column arrangement is in reverse order relative to an arrangement of multiple real PEs (12A), and data items are arranged consecutively in the multiple real PEs (12A) and the multiple virtual PEs (12B). The arithmetic device (10) performs a data movement in the multiple virtual PEs (12B) in a direction different from a direction of data movement in the multiple real PEs (12A) such that the data items are moved in an arrangement order of the data items.

## Description

### CROSS REFERENCE TO RELATED APPLICATION

This application is based on Japanese Patent Application No. 2023-154064 filed on September 21, 2023, the disclosure of which is incorporated herein by reference.

### TECHNICAL FIELD

The present disclosure relates to an arithmetic device and a data movement method.

### BACKGROUND ART

An arithmetic device including multiple processors arranged in an array (two-dimensionally) has been developed.

In such arithmetic device, there is a demand for improved data processing speed. For example, Patent Literature 1 describes an arithmetic device including multiple first processing cores arranged in an array and multiple second processing cores arranged in an array. In the arithmetic device, a subset of the first processing cores is arranged between a data processing circuitry and the multiple second processing cores.

### PRIOR ART LITERATURE

### PATENT LITERATURE

Patent Literature 1: US 11086574 B

### SUMMARY

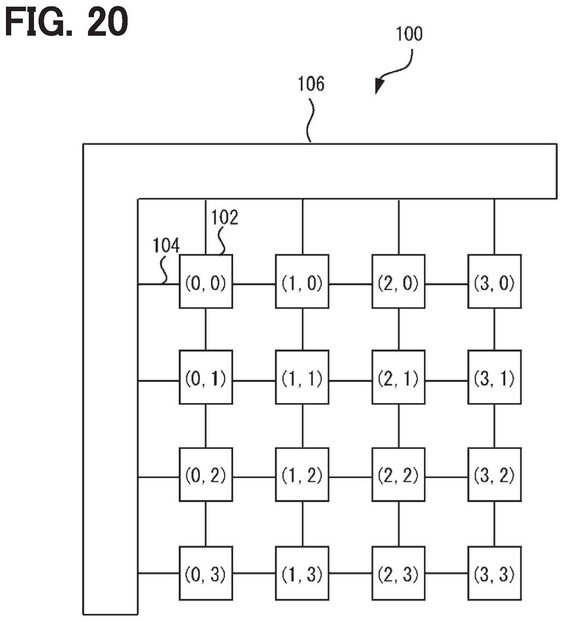

FIG. 20 is a schematic diagram of a conventional arithmetic device 100 in which processors (Processing Elements, hereinafter referred to as "PEs") 102 are arranged in an array. Note that (0, 0) and the like written in each PE 102 indicate the coordinates of each PE 102, with x=0 representing the first column and being described below as column number of 0, and y=0 representing the first row and being described below as row number of 0. A reference numeral 104 denotes wiring for inputting and outputting data between two PEs 102 or between the PE 102 and the external memory 106. In the conventional arithmetic device 100, allocation of data to each PE 102 is started, in order, from the top left PE 102 whose coordinates are (0,0). The data is input from the external memory 106 to the PEs.

When the amount of processing data is greater than the number of PEs 102, all of the data cannot be allocated to the PEs 102. For example, when the number of columns of PEs 102 is 4 and data processing is performed in the rightmost PE 102 of the column 3 using data in the PE arranged immediately to the right side of the rightmost PE 102 (hereinafter referred to as "data adjacent to the edge"), the data adjacent to the edge must be moved from the external memory 106 of the PE 102 at column 0, which is arranged on opposite end of the rightmost PE 102. In such data movement, the data adjacent to the edge needs to be moved for a long distance, which takes time to process.

Suppose that data required by another PE is stored, in advance, in each PE 102 rather than storing own data in each PE 102. In this case, the data required by the rightmost PE 102, which is the data from immediate right side of own PE, is stored in the leftmost PE 102 (x=0), and the data required by the leftmost PE 102, which is the data from immediate right side of own PE, is stored in the immediate right side PE (x=1). When arrangement of data before being placed in PE 102 is expressed as two-dimensional coordinates (X, Y), the data to be arranged in PEs 102, which are arranged in four rows vertically and four columns horizontally, is placed at the PE 102 position (x, y) = (remainder when X is divided by 4, remainder when Y is divided by 4). In this case, the data adjacent to the edge must be moved from the PE 102 arranged on the opposite edge, and the moving distance of data becomes long, which takes time for processing.

The present disclosure aims to provide an arithmetic device and a data movement method, which can efficiently process a large amount of data when the amount of data is larger than the number of processors.

According to an aspect of the present disclosure, an arithmetic device includes multiple processors. The multiple processors include multiple real processors and multiple virtual processors. The multiple virtual processors are arranged such that at least one of row arrangement or column arrangement is in reverse order relative to an arrangement of the multiple real processors, and data items are arranged consecutively in the multiple real processors and the multiple virtual processors. A data movement in the multiple virtual processors is performed in a direction different from a direction of data movement performed in the multiple real processors such that the data items are moved in an arrangement order in which the data items are arranged.

In the arithmetic device having the above configuration, the arrangement of virtual processors is set such that at least one of rows or columns is in the reverse order with respect to the arrangement of real processors. Then, data items are arranged consecutively in the real processors and the virtual processors. The virtual processors each is located at the same physical location as the corresponding real processor set in the array, and holds and moves the data item. The data item set in the virtual processor is held in a register provided in the corresponding processor at the same coordinates. That is, among multiple consecutive data items, the remaining data items after a part of the data items are allocated to the real processors are folded back and allocated to the virtual processors. Then, by moving the real processors and the virtual processors together in the same direction, the data items can be moved in the arrangement order in which the data items are arranged. In this case, a direction of data movement in the virtual processors is different from a direction of data movement in the real processors.

In the present configuration, when the data items are input from an external memory and to be held in the registers of the processors, the data items are held in forward or reverse order. For example, when the arrangement of data items before being allocated to the processors is expressed as two-dimensional coordinates (X, Y), the (x, y) of the data item to be allocated to one processor when four data items are arranged vertically and horizontally is as follows. If the quotient when X is divided by 4 is even, then x = "remainder when X is divided by 4", and if the quotient when X is divided by 4 is odd, then x = "3 - (remainder when X is divided by 4)". If the quotient when Y is divided by 4 is even, then y = "remainder when Y is divided by 4", and if the quotient when Y is divided by 4 is odd, then y = "3 - (remainder when Y is divided by 4)". Then, the data item represented by (X, Y) is allocated to the processor located at the calculated (x, y).

As a result, data that cannot be held in a real processor in the past can be set in a virtual processor and moved from the virtual processor to the real processor. Thus, a moving distance of data in the real processor can be reduced. Since data is moved from the virtual processor to the real processor, data processing can be performed continuously without inputting and outputting data between the external memory and the processor. Therefore, with this configuration, it is possible to efficiently process a large amount of data, which has an amount larger than the number of processors.

In the above-described arithmetic device, the data items to be moved from a register included in each of the multiple processors may be set in the corresponding real processor and corresponding virtual processor.

The above-described arithmetic device may be provided with a first wiring for performing the data movement in the multiple real processors and a second wiring for performing the data movement in the multiple virtual processors. The second wiring may be configured to perform the data movement in the direction different from the direction of data movement performed by the first wiring. This allows data movement in the real processors and the data movement in the virtual processors in a single operation. The second wiring may be omitted, and both the data movement in the virtual processors and the data movement in the real processors may use the first wiring only, by moving data items in different directions in multiple iterations.

In the above-described arithmetic device, in an execution of convolution operation using multiple processor groups in each of which the multiple processors are arranged in a two-dimensional array, the multiple virtual processors may be arranged around the multiple real processors with focus data items are set in the multiple real processors and peripheral data items relative to the focus data items are set in the multiple virtual processors. The focus data items are the data items at the center portion of the convolution operation, and also correspond to the peripheral data items relative to other focus data items when viewed from other processors.

In the above-described arithmetic device, the real processor located at a corner of one processor group may include at least three moving circuits for performing the data movement between own real processor and three virtual processors, which include one virtual processor located in a diagonal direction relative to own real processor. The real processor located on a side of one processor group excluding the corner may include at least one moving circuit for performing the data movement between own real processor and one virtual processor.

In the above-described arithmetic device, the multiple real processors may include one real processor that has eight moving circuits for performing the data movement between own real processor and eight virtual processors arranged in an upper direction, a lower direction, a left direction, a right direction, and diagonal directions relative to own real processor.

In the above-described arithmetic device, when the data items are input from an external memory to the multiple real processors, the multiple real processors may be configured to move the data items to the multiple virtual processors to have an order reverse to the arrangement order of the data items, and store the data items in registers of the multiple processors.

In the above-described arithmetic device, the data items may be input from the external memory to partial real processors, which are located in an end portion and an inner portion of the multiple real processors arranged in the two-dimensional array. The partial real processors each may reverse the arrangement order of the data items input to the end portion and the inner portion of the multiple real processors, and move the data items to the corresponding virtual processors in the order reverse to the arrangement order of the data items.

In the above-described arithmetic device, the multiple real processors and the multiple virtual processors may be logically arranged as a consecutive one-dimensional array, and one-dimensional data may be arranged consecutively in the multiple real processors and the multiple virtual processors.

In the above-described arithmetic device, the multiple processors each may alternately store the one-dimensional data in forward order or in reverse order for each row or each column of the multiple processors arranged in the two-dimensional array.

In the above-described arithmetic device, the multiple real processors and the multiple virtual processors each may be configured to arrange the data item, which is input, by dividing the data item into multiple data elements such that each data element has a predetermined number of bits, and move the multiple data elements, each of which is divided to have the predetermined number of bits, in units of data element.

In the above-described arithmetic device, the multiple processors each may arrange the multiple data elements, which is generated by dividing one data item, in forward order or in reverse order with the bit positions alternating for each of the multiple processors arranged in the two-dimensional array.

According to an aspect of the present disclosure, a data movement method for an arithmetic device is provided. The arithmetic device includes multiple processors, and the multiple processors include multiple real processors and multiple virtual processors. The data movement method includes: arranging the multiple virtual processors such that at least one of row arrangement or column arrangement is in reverse order relative to an arrangement of the multiple real processors; arranging data items consecutively in the multiple real processors and the multiple virtual processors; and performing a data movement in the multiple virtual processors in a direction different from a direction of data movement in the multiple real processors such that the data items are moved in an arrangement order in which the data items are arranged.

### EFFECTS OF INVENTION

According to the present disclosure, it is possible to efficiently process a large amount of data, which has an amount larger than the number of processors.

### BRIEF DESCRIPTION OF DRAWINGS

The above and other objects, features, and advantages of the present disclosure will become more apparent from the following detailed description with reference to the accompanying drawings. In the drawing:
FIG. 1 is a schematic diagram of an arithmetic device according to an embodiment;
FIG. 2 is a schematic diagram illustrating a real PE and a virtual PE according to an embodiment;
FIG. 3 is a schematic diagram illustrating an order of data items input to the PEs according to an embodiment;
FIG. 4 is a schematic diagram illustrating data movement in the arithmetic device according to an embodiment;
FIG. 5 is a schematic diagram illustrating data movement in the arithmetic device according to an embodiment;
FIG. 6 is a schematic diagram illustrating data movement in the arithmetic device according to an embodiment;
FIG. 7 is a schematic diagram illustrating a relationship between a focus data group and a necessary data group when performing a convolution operation according to an embodiment;
FIG. 8 is a schematic diagram illustrating the setting of a real PE group and a virtual PE group when performing a convolution operation according to an embodiment;
FIG. 9 is a schematic diagram illustrating a case where a focus data group is moved to the right in a convolution operation according to an embodiment;
FIG. 10 is a schematic diagram illustrating a case where a focus data group is moved to the right and downward in a convolution operation according to an embodiment;
FIG. 11 is a schematic diagram illustrating data input from an external memory to an arithmetic device according to an embodiment;
FIG. 12 is a schematic diagram illustrating data output from the arithmetic device to an external memory according to an embodiment;
FIG. 13 is a schematic diagram data input from an edge and inside of a real PE group according to an embodiment;
FIG. 14 is a schematic diagram illustrating a one-dimensional arrangement of real PEs and virtual PEs according to an embodiment;
FIG. 15 is a schematic diagram of one-dimensional data input to the arithmetic device according to an embodiment;
FIG. 16 is a schematic diagram illustrating movement of one-dimensional data in the arithmetic device according to an embodiment;
FIG. 17 is a schematic diagram illustrating movement of one-dimensional data in the arithmetic device according to an embodiment;
FIG. 18 is a schematic diagram illustrating movement of one-dimensional data in the arithmetic device according to an embodiment;
FIG. 19 is a schematic diagram illustrating data movement accompanying SIMD processing according to an embodiment; and
FIG. 20 is a schematic diagram of a conventional arithmetic device.

### DESCRIPTION OF EMBODIMENTS

The following will describe embodiments of the present disclosure with reference to the drawings. The embodiments described below show an example of the present disclosure, and the present disclosure is not limited to the specific configuration described below. In an implementation of the present disclosure, a specific configuration according to an embodiment may be adopted as appropriate.

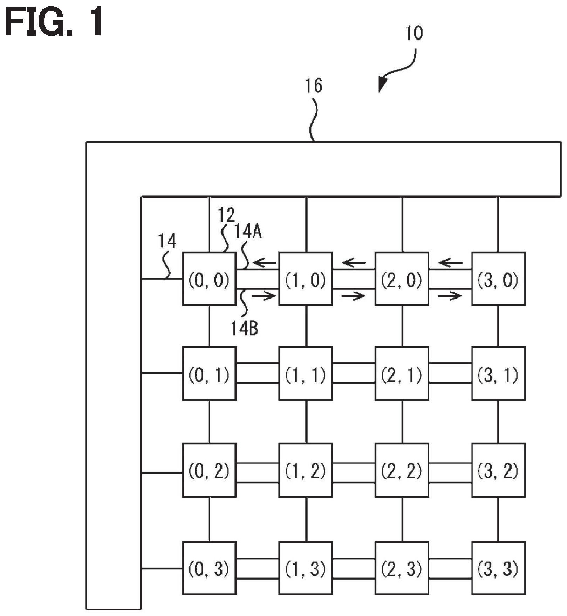

FIG. 1 shows a schematic configuration of an arithmetic device 10 according to the present embodiment.

The arithmetic device 10 includes multiple PEs (processing elements) 12. In the example of FIG. 1, a total of 16 PEs 12 are arranged two-dimensionally in four rows and four columns. The number of PEs 12 included in the arithmetic device 10 may be any plural number. Although the multiple PEs 12 are arranged in two-dimensional manner (in an array), the PEs may also be arranged in multi-dimensional manner, in three or more dimensions, which will be described later.

In the present embodiment, each PE 12 includes an arithmetic circuit and a register.

The arithmetic circuit performs various arithmetic operations such as ==, !=, >, >=, <, <=, >>, <<, or, and, min, max, clip, add, sub, mul, div, mod, macc, etc. The arithmetic circuit that performs the arithmetic operation can be selected by the arithmetic device 10 as appropriate. In the arithmetic device 10 of the present embodiment, one PE 12 includes multiple arithmetic circuits, and one PE 12 may select different arithmetic operations or multiple same arithmetic operations, from the multiple prepared operations, and perform the multiple same or different arithmetic operations simultaneously. Each PE 12 may perform a different arithmetic operation from one another, so that the arithmetic device 10 can simultaneously perform multiple different arithmetic operations by the multiple PEs.

The register is a storage unit that holds (stores) data. For example, the arithmetic circuit performs arithmetic operation on the data stored in the register, and stores the arithmetic result in the register. The PE 12 may include multiple registers.

The arithmetic device 10 is capable of performing various processes, such as data movement and data calculation in each PE 12. However, when the settings are prepared for each PE 12 by individual program, the amount of program may increase.

Therefore, an operation for executing a required function of the arithmetic device 10 may be set in advance or set by data for each PE 12, and each PE 12 may perform a different operation from one another according to the required function. It should be noted that this kind of data is setting data input to the PE 12, and is different from data to be moved between the PEs 12. By this configuration, there is no need to programmatically set the operation for each PE 12, thereby reducing the amount of program that controls the arithmetic device 10 to perform a specific function.

Each PE 12 also includes a moving circuit for moving data to the adjacent PE 12. Data movement settings such as moving direction and timing at which the moving circuit moves data to another PE 12 are also set in advance or by data.

The PE 12 acquires data from the external memory 16 via the wiring 14, and stores the data in the register. The PEs 12 are electrically connected with one another wirings 14A and 14B for moving data between two adjacent PEs 12. The wirings 14 between adjacent PEs 12 are omitted in some drawings. It should be noted that PEs 12 are connected to the external memory 16 by the wiring 14, and adjacent PEs 12 are connected with one another by the wiring 14, although the wiring is not shown. The data movement in the present embodiment also includes copying of data. The wiring 14A and 14B will be described in detail later.

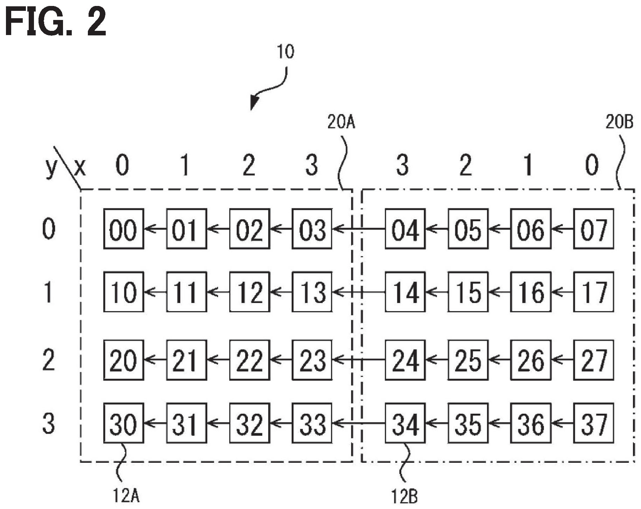

The arithmetic device 10 of the present embodiment will be described in detail with reference to FIG. 2. In FIG. 2, x represents the column coordinate (column number), and y represents the row coordinate (row number). In the arithmetic device 10 of the present embodiment, as shown in FIG. 2, the arrangement of virtual PEs 12 is set so that the columns are in reverse order with respect to the arrangement of the real PEs 12 as a reference. In the following description, the real PEs 12 are also referred to as real PEs 12A, and the group of real PEs 12A is also referred to as a real PE group 20A. The virtual PEs 12 are also referred to as virtual PEs 12B, and a group of the virtual PEs 12B is also referred to as a virtual PE group 20B. In the example of FIG. 2, the virtual PE group 20B is set adjacent to the real PE group 20A with the columns in the reverse order.

The real PE 12A is the same as the PE 12 shown in FIG. 1, and the arithmetic circuit performs various operations on input data. The virtual PE 12B is a PE 12 that does not actually exist, and therefore does not perform any calculations. The real PE 12A and the virtual PE 12B at the same coordinates (row and column numbers) has a correspondence relationship. That is, the virtual PE 12B is placed at the same physical location as the real PE 12A corresponding to the set array, and holds and moves data. The data set in the virtual PE 12B is held in the register of the PE 12 at the corresponding PE having the same coordinates.

Data to be moved from the register of PE 12 is set in the corresponding virtual PE 12B, similar to the real PE 12A. At this time, a circuit that can set data in both the real PE 12A and the corresponding virtual PE 12B at the same time may be provided.

When multiple data items are held in the register of PE 12 and a group of focus data items are to be processed, the focus data items are set in the moving circuit of the real PE 12A. Then, the peripheral data is set (copied) from the register to the moving circuit of the virtual PE 12B at once, so that the data group can be moved at once. As a result, even if the focus data group is changed to the data group immediately adjacent to the right, the same processing can be performed on a different data group by setting (copying) the data from the register. That is, the virtual PE 12B does not initially contain data.

In the present embodiment, data to be stored in the register of PE 12 is stored in forward or reverse order when the data is input from the outside. For example, before the data is stored in the PE 12, the arrangement of data may be expressed as two-dimensional coordinates o (X, Y). When the data is stored in the PEs 12 which are arranged in four rows vertically and for columns horizontally, the coordinates (x, y) is set as follows. If the quotient when X is divided by 4 is even, then x = "remainder when X is divided by 4", and if the quotient when X is divided by 4 is odd, then x = "3 - (remainder when X is divided by 4)". If the quotient when Y is divided by 4 is even, then y = "remainder when Y is divided by 4", and if the quotient when Y is divided by 4 is odd, then y = "3 - (remainder when Y is divided by 4)". Then, the data represented by (X, Y) is placed in the PE 12 located at the coordinates (x, y) calculated as described.

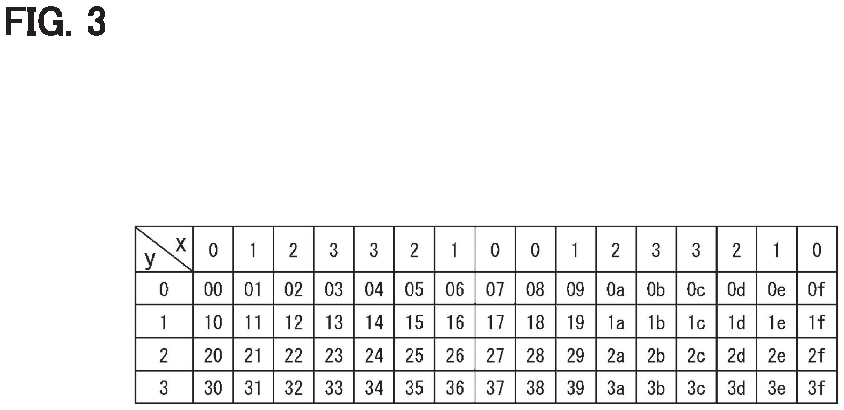

FIG. 3 shows an order of data input from the external memory 16 to each PE 12. The coordinates of x and y in FIG. 3 correspond to the column and row of the PE 12. As shown in FIG. 3, the x and y coordinates alternate between forward and reverse order, such as "0" to "3", "3" to "0", and "0" to "3", and correspondingly, data is input to PE 12 row by row (two-dimensionally).

The state in which the data shown in FIG. 3 is allocated to the real PE 12A and the virtual PE 12B is the numerical values in the real PE 12A and the virtual PE 12B in FIG. 2. As shown in FIG. 2, in the arithmetic device 10 of the present embodiment, data is arranged consecutively for each row in the real PE 12A and the virtual PE 12B.

In the example of FIG. 2 and FIG. 3, the real PEs 12A from (0,0) to (3,0) set data from "00" to "03", and the virtual PEs 12B from (3,0) to (0,0) arranged in the reverse order set data from "04" to "07". That is, the PE 12 turns back the continuous data at the end of the string, sets the data before turning back as the data of the real PE 12A, and sets the data after turning back as the data of the virtual PE 12B.

In this way, in the arithmetic device 10 of the present embodiment, data is allocated consecutively to the real PE 12A and the virtual PE 12B. The arithmetic device 10 then moves data between the virtual PEs 12B in a direction different from the direction of data movement between the real PEs 12A, thereby moving data in a data arrangement order, which is an order in which the data is arranged. Then, by moving the real PE 12A and the virtual PE 12B together in the same direction, it becomes possible to move the data in the data arrangement order. At this time, the moving direction of the virtual PE 12B is physically different from that of the real PE 12A.

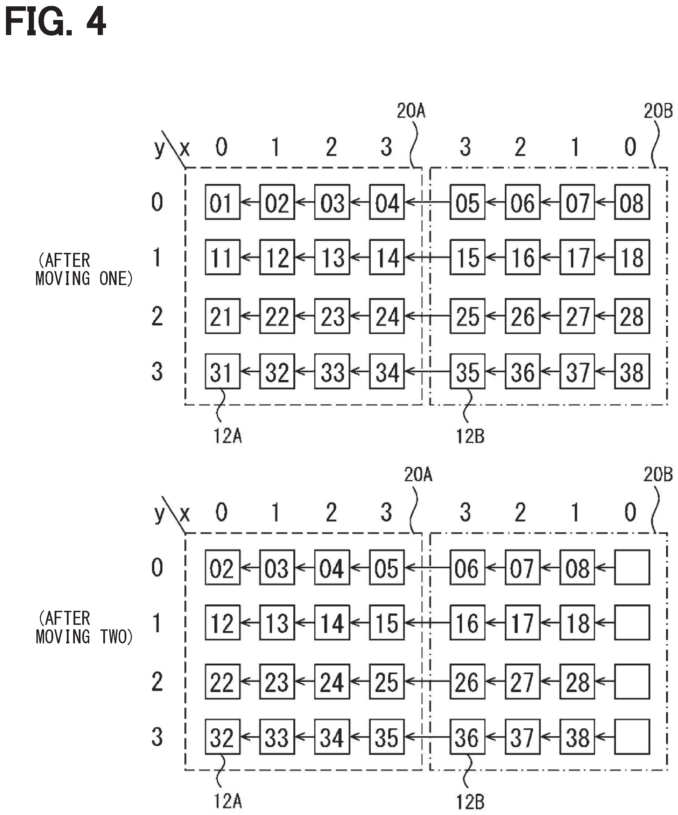

FIG. 4 to FIG. 6 are schematic diagrams showing data movement in the arithmetic device 10 of the present embodiment. FIG. 4 shows the state after one data item has been moved to the left from the data arrangement state shown in FIG. 2, and FIG. 4 also shows the state after two data items have been moved to the left from the data arrangement state shown in FIG. 2. The data movement is performed simultaneously in all PEs 12 in one direction in the data arrangement order. In the real PEs 12A, data simultaneously moves in a direction from (3,0) to (0,0), while in the virtual PEs 12B, data simultaneously moves in a direction from (0,0) to (3,0). That is, in the virtual PEs 12B, the data moves in a direction opposite to an arrangement order of the real PEs 12A.

For this reason, the arithmetic device 10 of the present embodiment includes wirings 14A and 14B between the PEs 12. The wiring 14A is the wiring 14 for moving data between the real PEs 12A. The wiring 14B is the wiring 14 for moving data between the virtual PEs 12B. The wiring 14A and the wiring 14B move data in different directions (opposite directions). By moving data using the wirings 14A and 14B in this way, data can be moved between the real PEs 12A and between the virtual PEs 12B at the same time. The arithmetic device 10 of the present embodiment may not include the wiring 14B, and may use only the wiring 14A for data movement between the virtual PEs 12B. In this case, data movement in different directions may be performed in multiple steps.

In order to move data between real PEs 12A and between virtual PEs 12B in different directions, each PE 12 includes a moving circuit used for moving data between real PEs 12A and a moving circuit used for moving data between virtual PEs 12B. These moving circuits may not only enable data movement between real PEs 12A or virtual PEs 12B adjacent to each other in the vertical or horizontal directions, but also between real PEs 12A or virtual PEs 12B adjacent to each other in the diagonal direction.

The data to be set in the virtual PE 12B of the column 3 is actually held in the register of the PE 12 of the column 3. Therefore, data movement from the virtual PE 12B in the column 3, which is the end of columns, to the real PE 12A in the column 3 is performed within the real PE 12A. For this reason, the PE 12 located at the end of the column is provided with a moving circuit that moves data in the own PE.

For example, when the real PE 12A in the column 3 performs arithmetic processing by referring to the data "04", "14", "24", and "34" adjacent to the data held in own PE, conventionally, the real PE 12A in the column 3 needs to obtain the data from the external memory 16 each time. In such a case, the real PE 12A in the column 3 needs to obtain data from the external memory 16 via the real PEs 12A in column 0 to column 2, which takes time to obtain the data. As shown in FIG. 20, suppose that data required by another PE is stored, in advance, in each PE 102 rather than storing own data in each PE 102. In this case, the data required by the rightmost PE 102, which is the data from immediate right side of own PE, is stored in the leftmost PE 102 (x=0), and the data required by the leftmost PE 102, which is the data from immediate right side of own PE, is stored in the immediate right side PE (x=1). When arrangement of data before being placed in PE 102 is expressed as two-dimensional coordinates (X, Y), the data to be arranged in PEs 102, which are arranged in four rows vertically and four columns horizontally, is placed at the PE 102 position (x, y) = (remainder when X is divided by 4, remainder when Y is divided by 4). In this case, the data adjacent to the edge must be moved from the PE 102 arranged on the opposite edge, and the moving distance of data becomes long, which takes time for processing.

In the present embodiment, as shown in FIG. 4, the real PE 12A in the column 3 acquires data from the virtual PE 12B in the column 3 adjacent thereto, so the data acquisition time is shorter than that in the conventional configuration.

After moving of data item to the left one time, data "08", "18", "28", and "38" are newly stored in the virtual PE 12B in column 0 according to the data arrangement order shown in FIG. 3. After moving of data items to the left twice, the virtual PE 12B of column 0 becomes empty without holding any data.

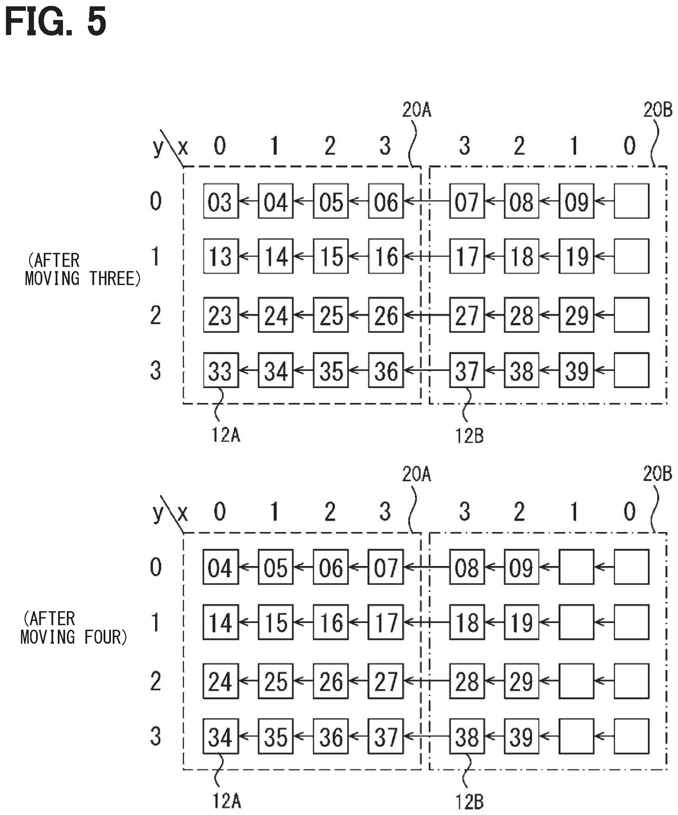

As shown in FIG. 5, after moving of data items to the left three times, data "09", "19", "29", and "39" are newly stored in the virtual PE 12B in column 1 according to the data arrangement order shown in FIG. 3. The virtual PE 12B located in column 0 becomes empty without holding any data. After moving of data items to the left four times, as the data moves leftward, the virtual PEs 12B in columns 0 and 1 become empty without holding any data.

Although not shown in the drawings, after five times of data movement toward the left, data "0a", "1a", "2a", and "3a" are newly allocated to the virtual PEs 12B in the column 2. The virtual PEs 12B in column 0 and column 1 become empty without holding any data. After six times of data movement, as the data moves leftward, the virtual PEs 12B from column 0 to column 2 become empty without holding any data.

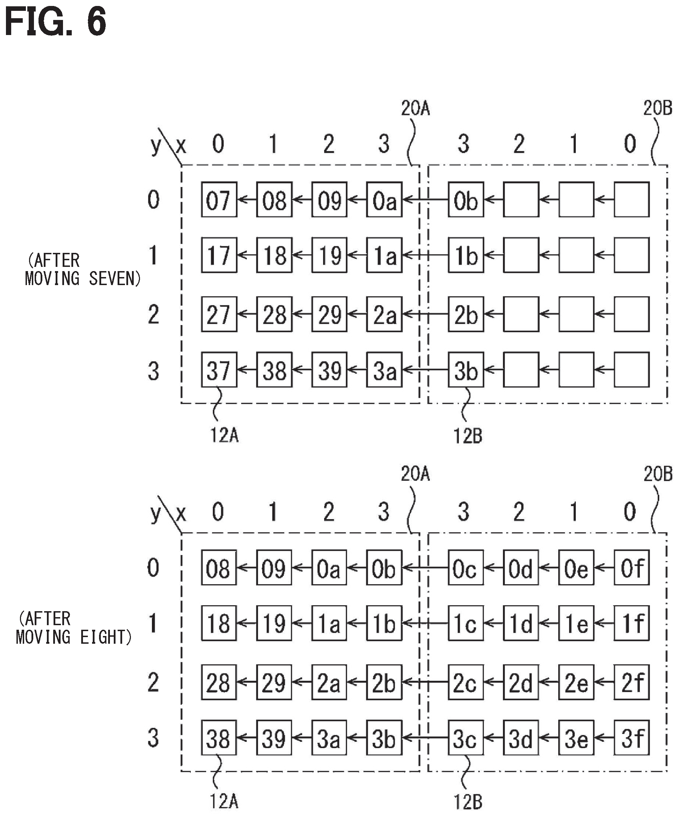

After seven times of data movement as shown in FIG. 6, the data is moved to the left, and data "0b", "1b", "2b", and "3b" are newly stored in the virtual PEs 12B in the column 3.

After eight times of data movement, the data is moved to the left, and data "0f" to "0c", "1f" to "1c", "2f" to "2c", and "3f" to "3c" are arranged in virtual PEs 12B in column 3 to column 0 according to the data arrangement order shown in FIG. 3. Then, the data continues to move leftward in the same manner as above, but no new data is allocated.

As described above, in the arithmetic device 10 of the present embodiment, the arrangement of virtual PEs 12B is set so that at least one of the rows or columns is in the reverse order relative to the arrangement of real PEs 12A. In the arithmetic device 10, data is allocated consecutively to the real PEs 12A and the virtual PEs 12B. The data set in the virtual PE 12B is held in a register, which is included in the PE 12 corresponding to the virtual PE 12B. That is, among the multiple consecutive data items, the remaining data items after being allocated to the real PEs 12A are folded back and allocated to the virtual PEs 12B. Then, by performing data movement in the virtual PEs 12B in a direction different from the data movement in real PEs 12A, it becomes possible to move data in the arrangement order of the data.

As a result, data that cannot be held in the real PE 12A in the past is possible to be set in the virtual PE 12B and moved from the virtual PE 12B to the real PE 12A, so that the data is input to the real PE 12A over a shorter moving distance. Since data is moved from the virtual PE 12B to the real PE 12A, data processing can be continued without inputting or outputting data between the external memory 16 and the PEs 12. Therefore, the arithmetic device 10 of the present embodiment can efficiently process a larger amount of data, which has an amount larger than the number of arranged PEs 12.

In the present embodiment, the virtual PE group 20B is set in a column-reversed order. However, the present disclosure is not limited to this configuration. As described above, it is sufficient that at least one of the rows or columns of the virtual PE group 20B is reversed relative to the real PE group. That is, the virtual PE group 20B may be arranged in reverse order in rows, or the virtual PE group 20B may be arranged in reverse order both in rows and columns.

### (Applying to convolution operation)

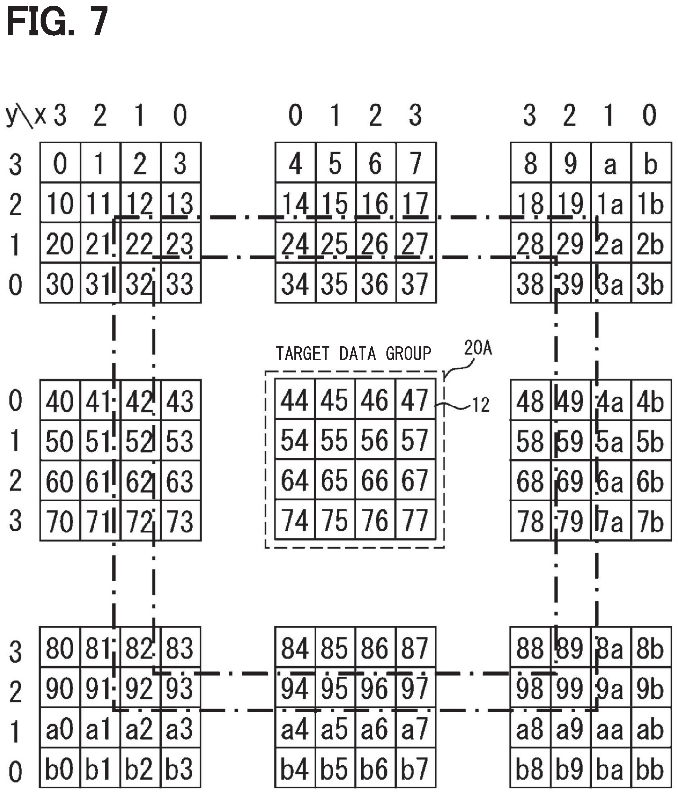

The following will describe a case where the above embodiment is applied to a convolution operation with reference to FIG. 7 to FIG. 10.

FIG. 7 is a schematic diagram showing the relationship between the data used in the convolution operation and the PE 12 in the present embodiment. In the example of FIG. 7, the arithmetic device 10 includes 16 PEs 12 (4 rows and 4 columns). The central data group including data items of "44" to "47", "54" to "57", "64" to "67", and "74" to "77" are the focus data of convolution operation. The focus data is data at the center of the convolution operation, and also corresponds to peripheral data relative to another focus data when viewed from another PE 12. In the peripheral data groups of the central data group, the data items in the inner dashed dotted line are the data items required for 3x3 convolution operation, and the data items within the outer dashed dotted line are the data items required for 5x5 convolution operation.

The arithmetic device 10 of the present embodiment is configured to place virtual PEs 12B around the real PEs 12A in order to perform convolution operations using PE group (real PE group 20A) in which PEs 12 are arranged in two-dimensional manner. Then, the focus data items are set to the real PEs 12A, and the necessary data items, which are peripheral data items of the focus data items, are set to the virtual PEs 12B.

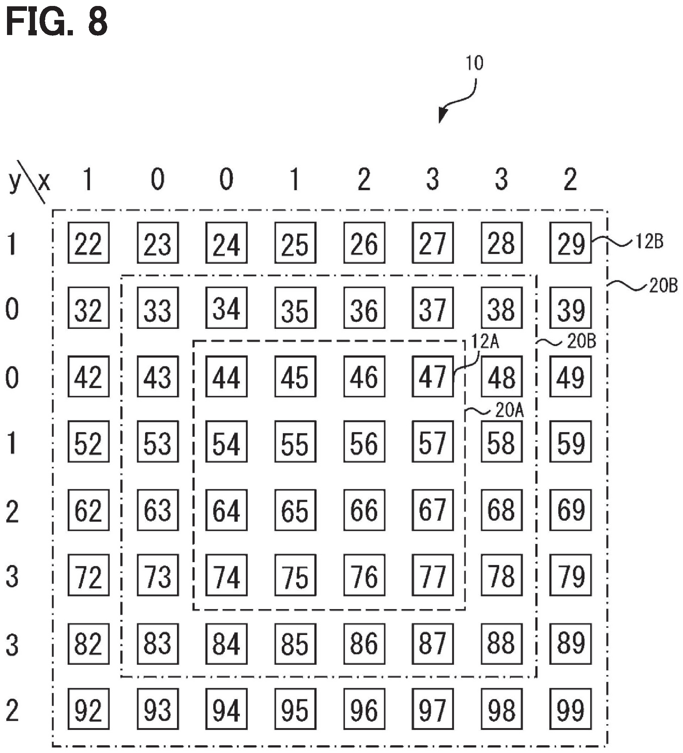

FIG. 8 shows the setting of the real PE group 20A and the virtual PE group 20B in the present embodiment. In the example of FIG. 8, the PEs within the dashed line surrounding (0,0) to (0,3) and (0,0) to (3,0) correspond to the real PE group 20A. The real PE group 20A is surrounded by the virtual PE group 20B. In the virtual PE group 12B (virtual six PEs 12B in each side) arranged in the dashed dotted line adjacent to the real PE group 20A by one row and one column, necessary data items for performing 3×3 convolution operation are set. In the virtual PE group 12B (virtual eight PEs 12B in each side) arranged in the dashed dotted line adjacent to the real PE group 20A by two rows and two columns, necessary data items for performing 5x5 convolution operation are set. Then, the data items are folded back as described above and set in the real PEs 12A and the virtual PEs 12B having the same coordinates.

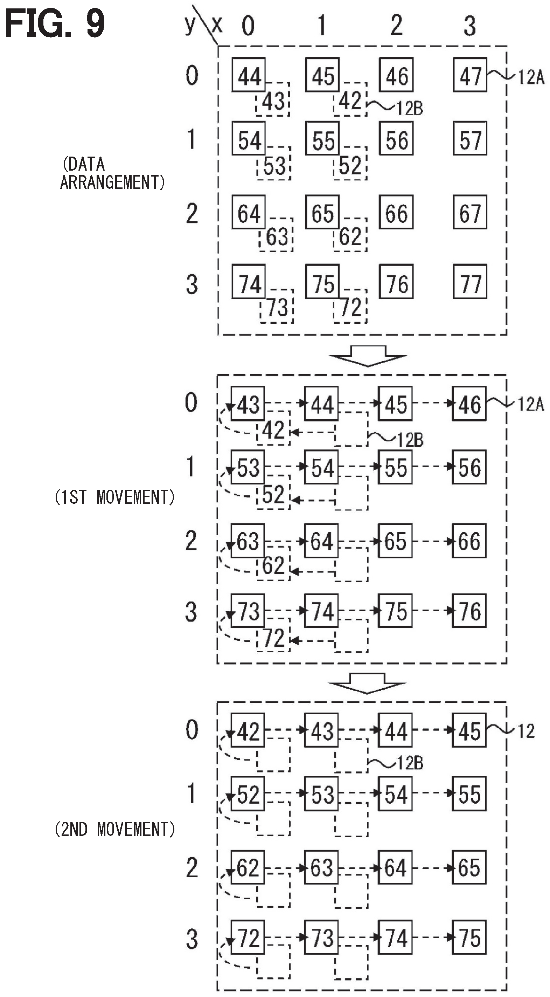

FIG. 9 is a schematic diagram showing a case where the focus data group is moved to the right in the convolution operation of the present embodiment. In FIG. 9, each virtual PE 12B is represented by dashed line, and is illustrated so as to partially overlap the corresponding real PE 12A. The PE 12 holds data of the real PE 12A and the virtual PE 12B, which have the same coordinates as one another. For example, the PE 12 at (0,0) holds data "44" of the real PE 12A and data "43" of the virtual PE 12B.

In the first movement for moving the focus data group to the right, the data held by the real PE 12A in each row is moved to the real PE 12A in the adjacent right column. The data held by the virtual PE 12B in each row is moved to the virtual PE 12A in the adjacent left column. In this way, data movement between real PEs 12A and data movement between virtual PEs 12B are performed in opposite directions. Note that the data movement from the virtual PE 12B with column number 0 to the real PE 12A with column number 0 is actually a data movement performed within a single PE 12 of column number 0.

Referring to FIG. 8, all data movements described in FIG. 9 are from left to right. The second movement to move the focus data group to the right is also similar to the first movement. The data held by the real PE 12A in each row is moved to the real PE 12A in the adjacent right column, and the data held by the virtual PE 12B in column 0 is moved to the real PE 12A in column 0.

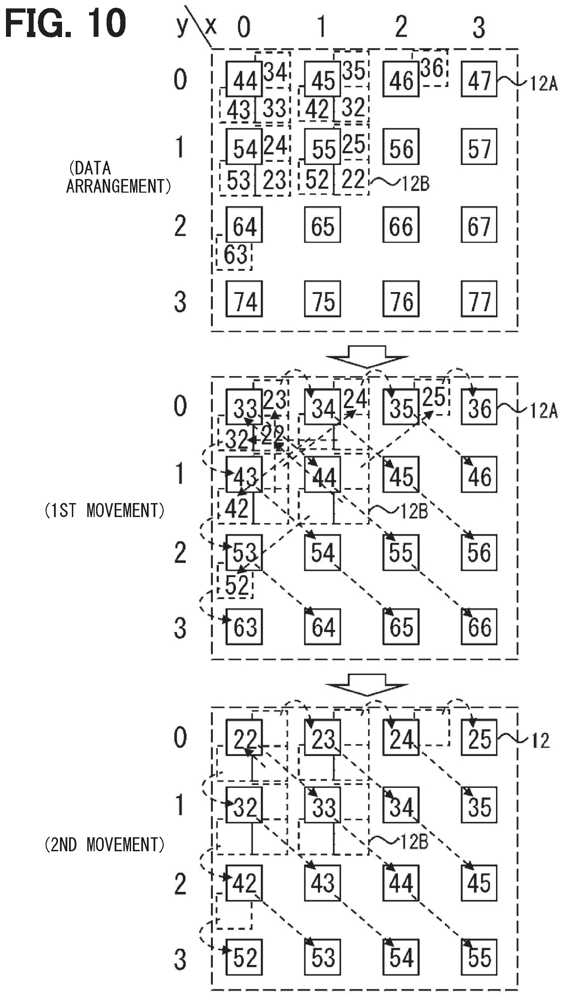

FIG. 10 is a schematic diagram showing a case where the focus data group is moved to the right and downward (diagonally downward right) in the convolution operation of the present embodiment. In FIG. 10, the PE 12 holds data items of real PE 12A and virtual PE 12B, which have the same coordinates as one another. The PE 12 holds data item of the real PE 12A, and data items of the virtual PEs 12B that overlap with the real PE 12A on the left side, the upper side, and the upper left side of the real PE 12A. For example, the PE 12 at (0,0) holds data item "44" of the real PE 12A and data items "33", "34", and "43" of the virtual PEs 12B.

In the first movement for moving the focus data group in the right direction and downward direction (diagonally downward right), the data item held by the real PE 12A is moved to the real PE 12A placed in diagonally downward right. For each of the real PEs 12A having coordinates of (1,0), (2,0), and (3,0), the data item held in the left side virtual PE 12B is moved to the real PE. For each of the real PEs 12A having coordinates of (0,1), (0,2), and (0,3), the data item held in the adjacent upper virtual PE 12B is moved to the real PE.

The data "33" of the virtual PE 12B at (0,0) is moved to the real PE 12A at (0,0).

The data "32" of the virtual PE 12B at (1,0) is moved to the adjacent left virtual PE 12B at (0,0), and the data "42" of the virtual PE 12B at (1,0) is moved to the virtual PE 12B at (0,1) arranged diagonally downward to the left.

The data "24" of the virtual PE 12B at (0,1) is moved to the virtual PE 12B at (1,0) arranged on upper right side, and the data "23" of the virtual PE 12B at (0,1) is moved to the virtual PE 12B at (0,0) arranged upper side.

The data "22" of the virtual PE 12B at (1,1) is moved to the virtual PE 12B at (0,0) arranged on upper left side, the data "25" of the virtual PE 12B at (1,1) is moved to the virtual PE 12B at (2,0) arranged on upper right side, and the data "52" of the virtual PE 12B at (1,1) is moved to the virtual PE 12B at (0,2) arranged on lower left side.

In this way, data between real PEs 12A moves in a diagonally downward direction to the right, while data between virtual PEs 12B moves in a direction different from the data movement in the real PEs 12A. With respect to FIG. 8, the data movement shown in FIG. 10 are in the diagonally downward right direction.

The second movement is similar to the first movement, and the data held by each real PE 12A is moved to the real PE 12A arranged diagonally to the lower right. Then, the data items held in the corresponding left adjacent virtual PEs 12B are moved to the real PEs 12A at (1,0), (2,0), and (3,0), respectively. The data items held in the corresponding upper adjacent virtual PEs 12B are moved to the real PEs 12A at (0,1), (0,2), and (0,3), respectively. The data held by the virtual PE 12B at (0,0) is moved to the real PE 12A at (0,0).

As described above, the arithmetic device 10 of the present embodiment is set so that the virtual PEs 12B are arranged around the real PEs 12A in order to perform the convolution operation using the real PE group 20A. Then, the focus data items are set to the real PEs 12A, and the necessary data items, which are peripheral data items of the focus data items, are set to the virtual PEs 12B. This eliminates the need to prepare PEs 12 for holding necessary data items to perform convolution operation, and shortens the path of data movement.

Once the data movement direction between real PEs 12A is determined, the data movement direction between virtual PEs 12B is also determined, so the data movement setting of virtual PEs 12B may be determined in relation to the data movement setting of real PEs 12A.

Among the PEs 12 of the present embodiment, the real PE 12A located at the corner of the real PE group 20A includes at least three moving circuits that perform data movement between the real PE 12A and three virtual PEs 12B, including the PE arranged in the diagonal direction. The real PE 12A arranged on the end of the real PE group 20A excluding the corners includes at least one moving circuit that moves data between the real PE 12A and one virtual PE 12B.

For example, in the case of performing 3×3 convolution operation as shown in FIG. 8, the real PE 12A at (0,0) arranged in the upper left corner of the real PE group 20A moves data to three virtual PEs 12B at (0,0). Therefore, the real PE 12A at (0,0) has at least three moving circuits for performing data movement with the three virtual PEs 12B at (0,0). The same applies to the real PEs 12A at (0, 3) in the lower left corner, (3, 0) in the upper right corner, and (3, 3) in the lower right corner.

The real PE 12A (0, 1) located on the left side of the real PE group 20A excluding the corner portion performs data movement with one virtual PE 12B (0, 1) located adjacent to own PE on the left. Therefore, the real PE 12A of (0,1) has at least one moving circuit for performing data movement with one virtual PE 12B at (0,1). The same applies to the real PEs 12A arranged on left side at (0,2), on the upper side at (1,0) and (2,0), on the right side at (3,1), (3,2), and lower side at (1,3), (2,3).

Similarly, when performing 5x5 convolution operation in FIG. 8, the real PEs 12A arranged in the upper left corner portion of the real PE group 20A is not only (0,0), but also (1,0), (0,1), (1,1), which are the width of two PEs 12. Therefore, each of these real PEs 12A has at least three moving circuits for performing data movement with the three virtual PEs 12B. The same applies to the real PEs 12A arranged in the lower left corner portion at (0,2), (1,2), (0,3), and (1,3). The same applies to the real PEs 12A arranged in the upper right corner portion at (2,0), (3,0), (2,1), and (3,1). The same applies to the real PEs 12A arranged in the lower right corner portion at (2,2), (3,2), (2,3), and (3,3).

Each side portion of the real PE group 20A excluding the corner portion has a width equivalent to two PEs 12, similar to the corner portion. In the case of PEs 12 with a width of four PEs, all of the PEs 12 correspond to corner portion, and therefore there are no PEs 12 that correspond to side portion.

When a large amount of peripheral data is required, such as in 7×7 or 9×9 convolution operation, the number of virtual PEs 12B and moving circuits may be increased. In this case, the width of PEs 12 is set to larger than four PEs.

In order to enable data movement among a larger number of virtual PEs 12B, the real PE 12A may be provided with eight moving circuits for performing data movement with eight virtual PEs 12B, including PEs arranged on upper side, lower side, left side, right side, and in diagonal directions.

The moving circuit that performs data movement between the real PE 12A and the virtual PE 12B does not have to be provided in all real PEs 12A. The above-described moving circuit may be provided only in the real PE 12A that has the virtual PE 12B arranged at the same coordinates. That is, the real PE 12A that does not have a virtual PE 12B at the same coordinates does not have a moving circuit for moving data between the real PE 12A and the virtual PE 12B. For example, when only the 3×3 convolution operation in FIG. 8 is performed, the central PEs at (1,1), (2,1), (1,2), and (2,2) correspond to the real PEs 12A that does not have virtual PEs 12B.

### (Data input and output between external memory and PE)

The following describes data input and output between the external memory 16 and the PE 12.

In the present embodiment, when data is input from external memory 16 to real PE 12A (PE 12), the arithmetic device 10 moves the data held in the real PE 12A to the virtual PE 12B, reverses the data arrangement order, and stores the data in the register provided in the PE 12.

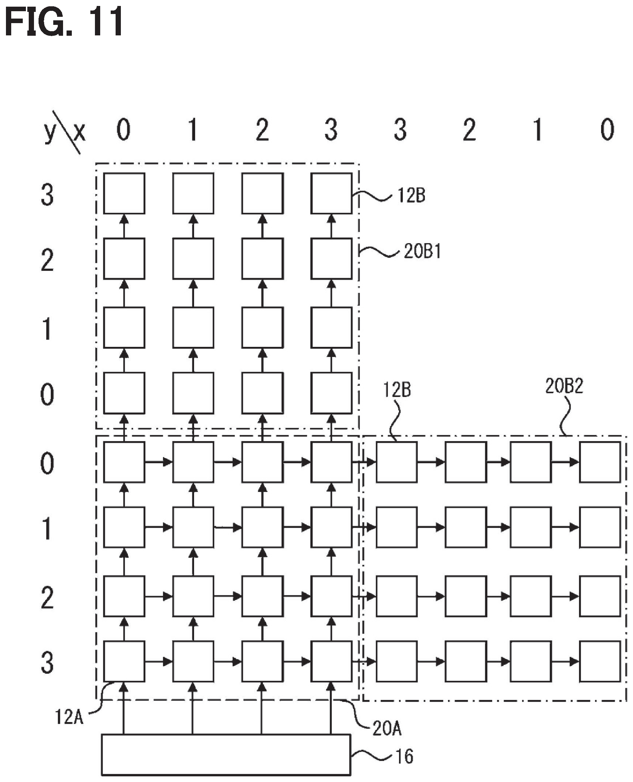

FIG. 11 is a schematic diagram showing data input from the external memory 16 to the arithmetic device 10 of the present embodiment. In FIG. 11, the PEs 12 within the dashed line are the real PEs 12A, and the PEs 12 within the dashed dotted line are the virtual PEs 12B. In the virtual PE group 20B1, the rows (arranged in vertical direction in FIG. 11) are arranged in reverse order when moving data from the real PEs 12A, and the data is held in the register provided in the PE 12. Then, in the virtual PE group 20B2, the columns (arranged in horizontal direction in FIG. 11) are arranged in reverse order when moving data from the real PEs 12A, and the data is held in the register provided in the PE 12. The virtual PE 12B performs a process of folding back the data items input from the external memory 16, stores the unfolded data items in the register provided in the PE 12, and also stores the fold-back data items in a register provided in the PE 12. When reversing the arrangement order of data items in both row and column, the data items are first moved to the virtual PE group 20B1, then moved to the real PE 12A at the same coordinates, and then moved to the virtual PE group 20B2.

In FIG. 11, as an example, data items (data group) are input from the external memory 16 to the real PEs 12A (PEs 12) arranged in the row 3, and each real PE 12A holds the data in forward order. Then, each real PE 12A moves the data items, for which the arrangement of row order needs to be reversed among the input data items, to the virtual PE group 20B1, thereby reversing the row order of input data items and then storing the data items in a register provided in the PE 12. Then, each real PE 12A moves the data items, for which the arrangement of column order needs to be reversed among the input data items, to the virtual PE group 20B2, thereby reversing the column order of input data items and then storing the data items in a register provided in the PE 12.

As an example, when the second group of data items is to be input after the first group of data items is input from the external memory 16 to the real PEs 12A, the real PEs 12A may be configured to move the first group of data items to the virtual PEs 12B. In this way, the real PEs 12A may simultaneously perform input of data group and reversing the order of data group.

In the example of FIG. 11, the register provided in PE 12 holds data items with rows in reverse order or data items with columns in reverse order, but the same applies when the virtual PEs 12B hold data items with both rows and columns in reverse order. Although the external memory 16 is arranged on the lower side, the external memory may be arranged on the upper side, left side, or right side. Further, different data items may be input from different directions at the same time.

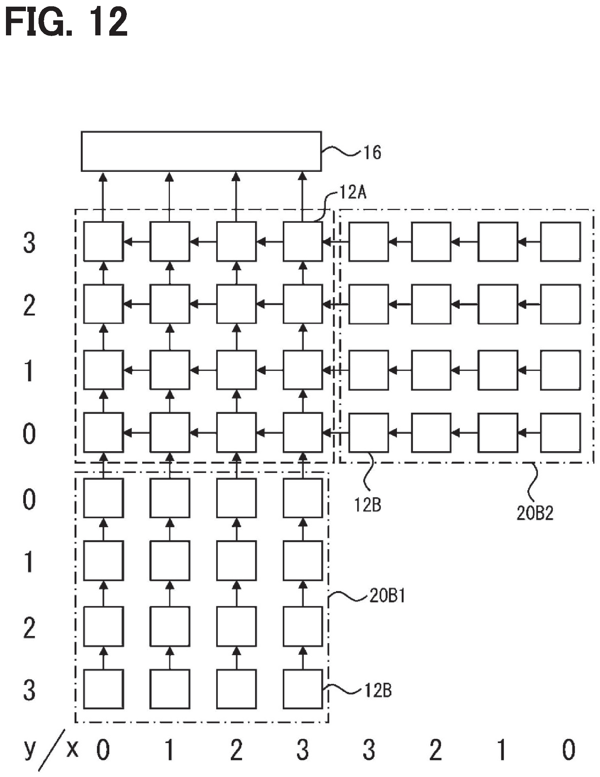

FIG. 12 is a schematic diagram showing data output from the arithmetic device 10 to the external memory 16 according to the present embodiment.

The data output process from the arithmetic device 10 to the external memory 16 is the reverse processing of the data input described above. Data is set from a register provided in the PE 12 to the virtual PE 12B, and the data is moved from the virtual PE 12B to the real PE 12A to reverse the data arrangement, thereby restoring the data arrangement to the forward order. Then, the real PE 12A outputs the data that has been restored in the forward order to the external memory 16. The real PE 12A may perform a process of restoring the data to the forward order by moving the data from the virtual PE 12B while outputting the data to the external memory 16. Although the external memory 16 is arranged on the upper side, the external memory may be arranged on the lower side, left side, or right side. Further, different data items may be output from different directions at the same time.

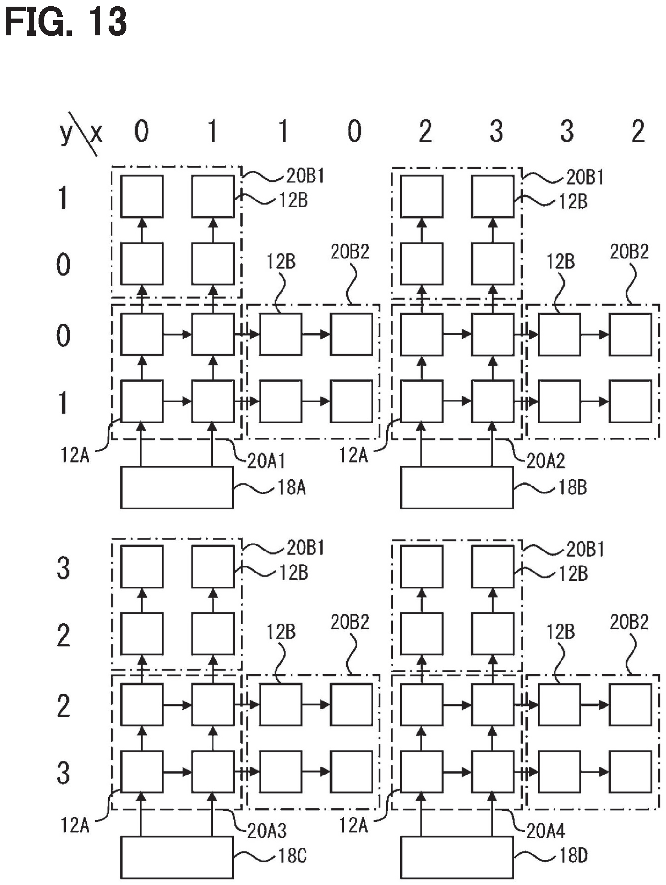

FIG. 13 is a schematic diagram showing data input from the end portion and inner portion of the real PE group 20A. As shown in FIG. 13, among the real PEs 12A arranged in two-dimensional manner, data items are input from an intermediate external memory 18 to the real PEs 12A arranged at the end portion and the inner portion. Then, the data items input from the real PEs 12A arranged at the end portion and the inner portion are moved to the virtual PEs 12B, thereby reversing the data arrangement order.

In the example of FIG. 13, the real PEs 12A are virtually divided into four real PE groups 20A1 to 20A4. The number of real PEs 12A included in each of the virtually divided real PE groups 20A1 to 20A4 is the same.

In the example of FIG. 13, for the real PE group 20A1, data items are input from the intermediate external memory 18A to the real PEs 12A at (0,1) and (1,1). The real PEs 12A at (2,1) and (3,1) receive data items corresponding to the real PE group 20A2 from the intermediate external memory 18B. The real PEs 12A at (0,3) and (1,3) receive data items corresponding to the real PE group 20A3 from the intermediate external memory 18C. The real PEs 12A at (2,3) and (3,3) receive data items corresponding to the real PE group 20A4 from the intermediate external memory 18D. Then, in the real PE groups 20A1 to 22A4, the input data groups are moved to the corresponding virtual PE groups 20B1 and 20B2, thereby reversing the data arrangement order.

When the rows of data items are reversed, the data items moved to the virtual PEs 12B in row 0 are the data items that were input to the real PEs 12A in row 3 before the rows were reversed, and the data items moved to the virtual PEs 12B in row 1 are the data items that were input to the real PEs 12A in row 2 before the rows were reversed. Therefore, when setting the rows in forward order, the intermediate external memories 18A and 18B input data items held in row 0 and row 1 of the real PEs 12A. When setting the rows in reverse order, the intermediate external memories 18A and 18B input data items held in row 2 and row 3 of the real PEs 12A. Then, the real PEs 12A move the data items in the row 2 and row 3 to the virtual PEs 12B, thereby reversing the row order.

When setting the rows in forward order, the intermediate external memories 18C and 18D input data items held in row 2 and row 3 of the real PEs 12A. When setting the rows in reverse order, the intermediate external memories 18C and 18D input data items held in row 0 and row 1 of the real PEs 12A. Then, the real PEs 12A move the data items in the row 0 and row 1 to the virtual PEs 12B, thereby reversing the row order.

For the columns, when setting the columns in forward order, the intermediate external memories 18A and 18C input data items held in column 0 and column 1 of the real PEs 12A. When setting the columns in reverse order, the intermediate external memories 18A and 18C input data items held in column 2 and column 3 of the real PEs 12A. Then, the real PEs 12A move the data items in the column 2 and column 3 to the virtual PEs 12B, thereby reversing the column order. The intermediate external memories 18B and 18D input data items held in column 2 and column 3 of the real PEs 12A. When setting the columns in reverse order, the intermediate external memories 18B and 18D input data items held in column 0 and column 1 of the real PEs 12A. Then, the real PEs 12A move the data items in the column 0 and column 1 to the virtual PEs 12B, thereby reversing the column order.

Instead of inputting data items corresponding to the arrangement of virtual PEs 12B from the intermediate external memories 18A to 18D to the real PEs 12A as described above, the data items may be input from the intermediate external memories 18A to 18D to the real PEs 12A as shown in FIG. 11, and then the real PEs 12A may move the data items to the virtual PEs 12B to set the reverse arrangement order of data items. When reversing the row order, it is necessary to change row 0 and row 1 of the real PEs 12A to row 2 and row 3 of the real PEs 12A, and change row 2 and row 3 of the real PEs 12A to row 0 and row 1 of the real PEs 12A. Therefore, in order to reverse the order simultaneously with the input process, the number of moving circuits needs to be increased so that the data movement can be performed simultaneously. For reversing the order of columns, same applies.

When data items are output from the real PEs 12A to the intermediate external memories 18A to 18D, output processing, which is reverse processing of input processing, is performed, and the data items with reversed order are restored to have the forward order and then output to the outside.

In the example of FIG. 13, four intermediate external memories 18 are provided as an example. In the arithmetic device 10 of another example, data items may be input to the real PEs 12A from two or more intermediate external memories 18, and the number of intermediate external memories may be increased to allow a large amount of data items are input and output simultaneously for each fine groups of PEs 12. The external memories 16 are arranged on upper side and lower side. The external memories may be arranged on upper side, lower side, left side, or right side, and data items may be input or output in different directions at the same time.

### (Processing of one-dimensional data)

The data input to the arithmetic device 10 of the present embodiment may be one-dimensional consecutive data (hereinafter referred to as "one-dimensional data"). Therefore, in the arithmetic device 10 of the present embodiment, the real PEs 12A and the virtual PEs 12B are logically set as a consecutive one-dimensional array, and one-dimensional data is arranged consecutively in the real PEs 12A and the virtual PEs 12B.

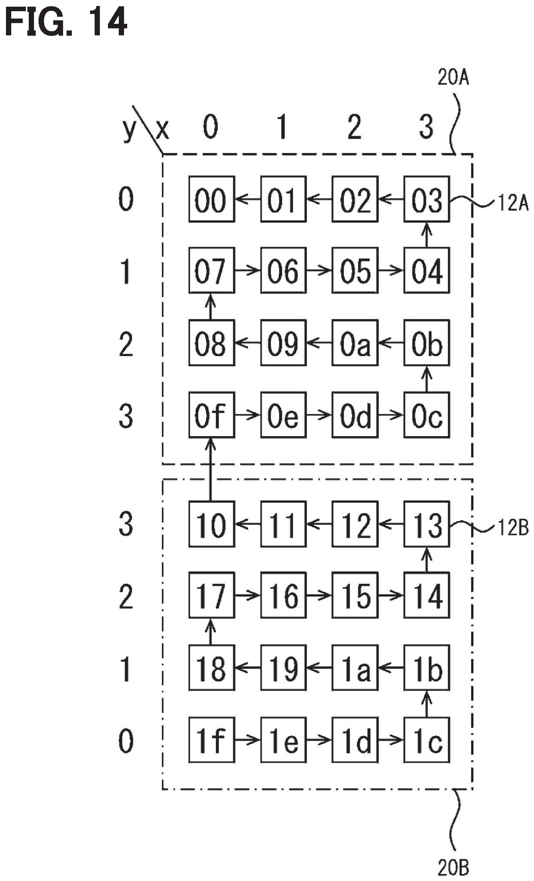

As shown in FIG. 14, the arithmetic device 10 of the present embodiment sets the real PE 12A at (0, 0) as the head of real PE group 20A. Then, the real PE 12A at (3,0) and the real PE 12A at (3,1), which are arranged at the end portion of the column, perform data movement across the rows. On the opposite end, the real PE 12A at (0,1) and the real PE 12A at (0,2) perform data movement across the rows. On further opposite end, the real PE 12A at (3,2) and the real PE 12A at (3,3) perform data movement across the rows. Other real PEs 12A perform data movement from column to column. The virtual PE group 20B also performs a similar data movement, and data movement is possible between the real PE 12A at (0, 3) and the virtual PE 12B. With such settings, the arithmetic device 10 of the present embodiment has the real PEs 12A and the virtual PEs 12B logically arranged in a consecutive one-dimensional arrangement.

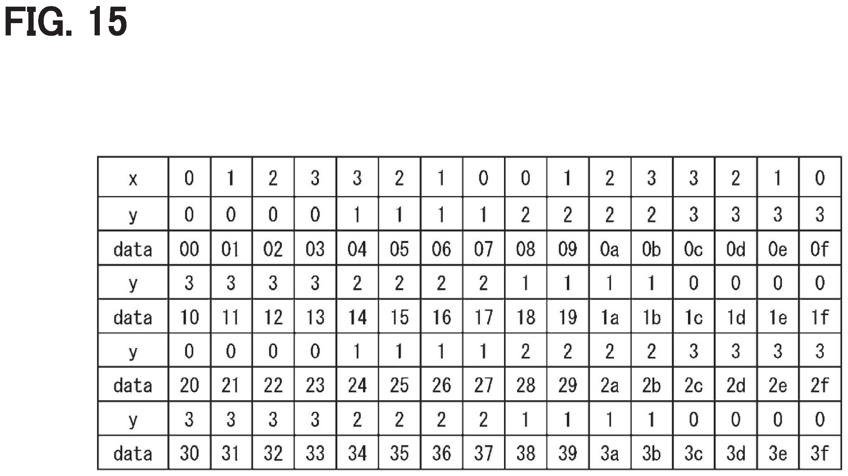

FIG. 15 shows the order of data input from the external memory 16 to each PE 12. In FIG. 3, x represents the column number and y represents the row number. Further, data is an example of a value input to each PE 12, and is one-dimensional data consisting of multiple consecutive data items FIG. 14 also shows a state in which the data items shown in FIG. 15 are allocated to the real PEs 12A and the virtual PEs 12B.

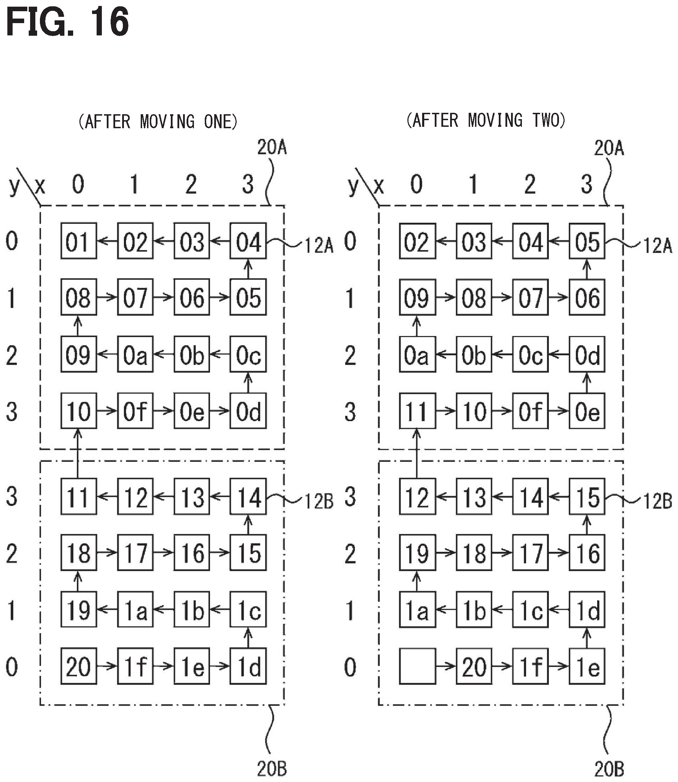

FIG. 16 to FIG. 18 each is a schematic diagram showing data movement in the arithmetic device 10 according to the present embodiment. FIG. 16 shows a state after one data item has been moved from the data allocation state of FIG. 14 and also shows a state after two data items have been moved. The data movement is performed in the order in which the consecutive data items are arranged. In the arrangement order of the PEs 12, for example, data item moves from PE (0,3) to PE (0,0) in the real PEs 12A, while data moves from PE (0,0) to PE (0,3) in the virtual PEs 12B. That is, in the virtual PEs 12B, the data items move in a direction opposite to an arrangement order of the real PEs 12A.

After one data item is moved, data "20" is newly allocated to the virtual PE 12B at (0,0). After two data items have been moved, the virtual PE 12B at (0,0) becomes empty without holding any data.

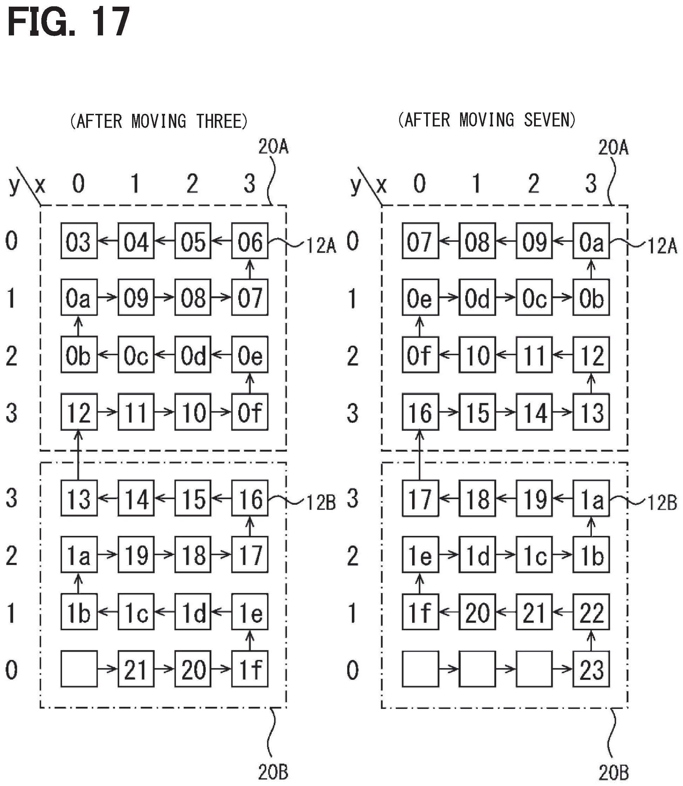

After three data items have been moved, as shown in FIG. 17, data "21" is newly allocated to the virtual PE 12B at (1,0), and the virtual PE 12B at (0,0) remains empty without holding any data. Such data movement is repeated. After seven data items are moved, data "23" is newly added to the virtual PE 12B at (3,0), and the virtual PEs 12B at (0,1) to (0,2) become empty.

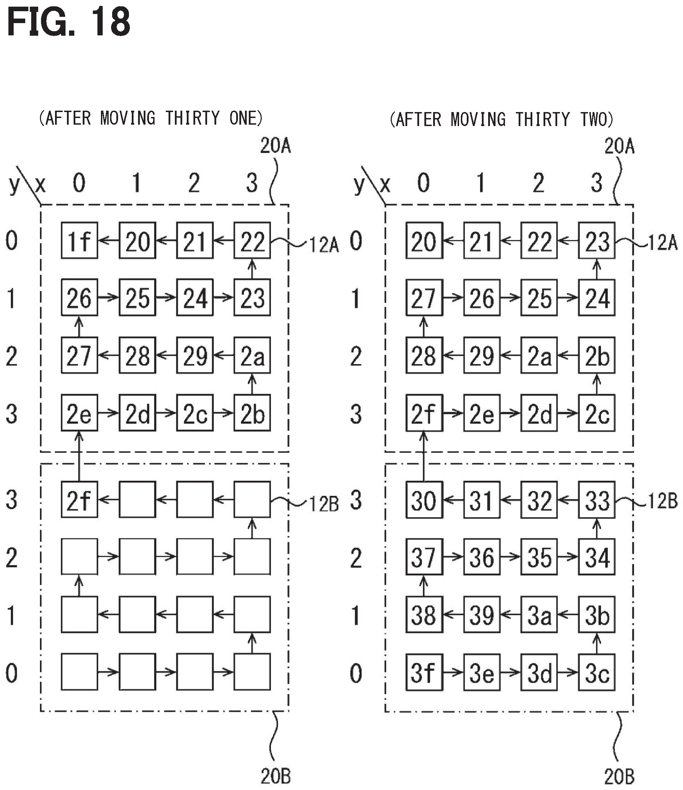

After 31 data items have been moved, as shown in FIG. 18, data "2f" is newly added to the virtual PE 12B at (0, 3), and the virtual PEs 12B other than (0, 3) become empty. After 32 data items have been moved, data "30" to "3f" are newly added to the virtual PEs 12B.

Note that the one-dimensional arrangement of real PEs 12A and the virtual PEs 12B shown in FIG. 14 and other figures are shown as examples, and the arrangement is not limited to these examples. In FIG. 14 or other figures, the real PEs 12A and the virtual PEs 12B are arranged in one dimension by lining them up horizontally and then changing the arrangement order in vertical dimension when the horizontal dimension is filled. Alternatively, the real PEs and the virtual PEs may be arranged in one dimension by lining them up vertically and then changing the arrangement order in horizontal dimension when the vertical dimension is filled. Alternatively, the real PEs 12A may be arranged so that a real PE 12A other than the real PE 12A at (0,0) becomes the head. For example, the real PE 12A at (3,0) may be set as the head.

In the present embodiment, the one-dimensional data items held by the PEs 12 are arranged alternately in forward or reverse order for each row of the two-dimensionally arranged PEs 12. This configuration allows the arithmetic device 10 of the present embodiment to move data held in multiple PEs 12 between the PEs 12 as one-dimensional data. In the example of FIG. 14, data items are moved from column to adjacent column. when the data items are moved from row to adjacent row, the data items held by PEs 12 are arranged in forward or reverse order alternately for each column of PEs 12 arranged in two-dimensional manner.

In the present embodiment, the PEs 12 are arranged in one-dimensional manner. Similar to "data input and output between external memory and PE" in the embodiment where PEs 12 are arranged in two-dimensional manner, data items may be input from the external memory 16 or intermediate external memory 18, and then moved to the virtual PEs 12B in reverse order. When outputting the data items, a process reverse to the data input process may be carried out to restore the data items from reverse order to the forward order, and then the data items are output to the external memory 16 or the intermediate external memory 18.

### (Applying to SIMD processing)

In the present embodiment, the real PE 12A and the virtual PE 12B may divide the input data into multiple data elements each having a predetermined number of bits, and then move each element divided to have the predetermined number of bits.

The PE 12 of the present embodiment performs, in a single PE, parallel processing by SIMD (Single Instruction Multiple Data) processing in order to simultaneously perform arithmetic operation and data movement on multiple data elements each is divided to have the predetermined number of bits. In the following description, data element divided to have the predetermined number of bits is also referred to as divided data element.

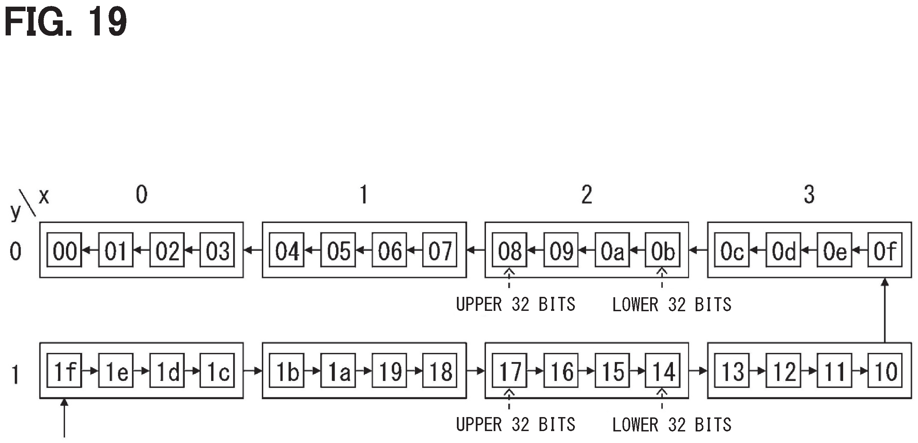

In the present embodiment, as an example, 128-bit data is input to the PE 12, and the PE 12 divides the data into 32-bit data and stores divided data elements in a register. That is, the PE 12 stores four divided data elements each having 32-bit in a register. In the example of FIG. 19, the PEs 12 are logically set as a consecutive one-dimensional array, and one PE 12 holds four divided data elements in order from the most significant 32 bits to the least significant 32 bits. The lower 32-bit divided data element in each PE 12 is arranged so as to be consecutive with the upper 32-bit divided data element of another PE 12 (PE 12 with a larger column number) adjacent to the right.

Referring to FIG. 19, the divided data element held by the PE 12 in row 0 moves leftward toward the PE 12 at (0,0). Therefore, in row 0, the upper 32 bits of the divided data element held by the PE 12 on the right side is moved leftward to the position of the lower 32 bits of the divided data element in the adjacent PE 12. The divided data element held by the PE 12 in row 1 is moved to the right. Therefore, in row 1, the lower 32 bits of the divided data element held by the PE 12 on the left side is moved rightward to the position of the upper 32 bits of the divided data element in the adjacent PE 12. The PE 12 is provided with a moving circuit for moving the divided data element within own PE 12.

In order to perform the one-dimensional data movement described above, in the example of FIG. 19, the data arrangement of odd-numbered rows is reversed relative to the data arrangement of even-numbered rows. That is, the divided data elements are arranged in reverse order in each PE 12 with odd-numbered rows relative to the even-numbered rows. In FIG. 19, for example, in the PE 12 at row 1, column 2 (2,1), the front data "14" is arranged in the lower 32 bits, and the rear data "17" is placed in the upper 32 bits.

The PEs 12 at the ends of each row, except for the PE 12 at (0,0), are capable of performing data movement with the PEs 12 arranged in another row (upper or lower row). Therefore, the lower 32-bit divided data element of the PE 12 at (3,1) is moved to the position of the lower 32-bit divided data element of the PE 12 at (3,0).

In the present embodiment, the multiple divided data elements held by the PE 12 are arranged alternately in forward or reverse order for each row of the PEs 12 arranged in two-dimensional manner. This allows the arithmetic device 10 of the present embodiment to move divided data elements, which are arranged in multiple PEs 12, from one PE 12 to another PE as one-dimensional data. In the example of FIG. 19, the divided data elements are moved by columns. Suppose that the divided data elements are moved by rows. In this case, the divided data elements held by the PEs 12 are arranged alternately in forward or reverse order for each column of PEs 12 arranged in two-dimensional manner.

The bit positions of the multiple divided data elements held by the PE 12 may be arranged alternately in forward or reverse order for each PE 12 so that the same bit is moved between different PEs 12. In this case, when data is input from the outside, the data is stored in forward or reverse order. When the data is output to the outside, it is restored to forward order and output. But the order can also be reversed all at once by providing, to the PE 12, a swapping circuit that reverses the bit positions.

The example of FIG. 19 shows the arrangement of multiple divided data elements in the real PE 12A. Although not shown, the arrangement of divided data elements in the virtual PE 12B is similar, and data elements are arranged consecutively in the real PE 12A and the virtual PE 12B. Then, the above-described data movement is performed on the multiple divided data elements allocated to the real PE 12A and the virtual PE 12B.

Instead of each PE 12 holding the divided data elements in one row and four columns as shown in FIG. 19, the divided data elements may be held in a two-dimensional manner, for example, in two rows and two columns. In this case, the divided data elements held two-dimensionally in the PEs 12 is arranged alternately in forward or reverse order for each row or column. This allows the arithmetic device 10 of the present embodiment to move divided data elements, which are arranged in multiple PEs 12, from one PE 12 to another PE as one-dimensional data.

The number of rows and columns of divided data elements within one PE 12 may be properly determined and moved according to the number of bits and the number of divisions of one data item input to the PE 12. Although the above description is for moving divided data elements in one-dimensional manner, to move divided data elements in two-dimensional manner, the dividing processing of data elements and the data movement processing of two-dimensional data elements may be combined.

Although the present disclosure is described with the embodiments and modifications as described above, the technical scope of the present disclosure is not limited to the scope described in the above embodiments and modifications. Various changes or improvements can be made to the above embodiments and modifications without departing from the scope of the present disclosure, and other modifications or improvements are also included in the technical scope of the present disclosure.

In the above embodiments, the data items are arranged from left to right from the PE 12 at (0,0) to the PE 12 at (3,0), but the present disclosure is not limited to this arrangement. For example, the data items may be arranged from upper side to lower side, or from right side to left side, from lower side to upper side.

In order to perform data movement at a higher speed, data movement using the real PEs 12A and the virtual PEs 12B may be multiplexed.

Instead of moving data items in upper direction, lower direction, left direction and right direction with the PEs 12 arranged in two-dimensional manner, data items may be moved diagonally or may be moved in multiple dimensions such as three or four dimensions. In a multidimensional array, the PEs 12 are represented by a multidimensional coordinate system that includes two dimensions indicating the up, down, left, and right directions (XY directions) as well as other directions (ZW direction). In a multidimensional array, the PEs 12 are capable of inputting and outputting data between adjacent PEs 12 in the XY direction, and are also capable of inputting and outputting data between adjacent PEs 12 in other dimensions such as the ZW direction. When the PEs 12 are arranged in three or more dimensions, each PE 12 is connected to the PEs 12 in the XY direction and the ZW direction by wirings 14A and 14B.

The following will describe features of multiple aspects of the present disclosure.

### (Aspect 1)

An arithmetic device (10) includes multiple processors (12). The multiple processors include multiple real processors and multiple virtual processors. The multiple virtual processors (12B) are arranged such that at least one of row arrangement or column arrangement is in reverse order relative to an arrangement of the multiple real processors (12A), and data items are arranged consecutively in the multiple real processors and the multiple virtual processors. A data movement in the multiple virtual processors is performed in a direction different from a direction of data movement performed in the multiple real processors such that the data items are moved in an arrangement order in which the data items are arranged.

### (Aspect 2)

In the arithmetic device according to aspect 1, the data items to be moved from a register included in each of the multiple processors are set in the corresponding real processor and corresponding virtual processor.

### (Aspect 3)

The arithmetic device according to aspect 1 or 2 may further include a first wiring (14A) for performing the data movement in the multiple real processors and a second wiring (14B) for performing the data movement in the multiple virtual processors. The second wiring performs the data movement in the direction different from the direction of data movement performed by the first wiring.

### (Aspect 4)

In the arithmetic device according to any one of aspects 1 to 3, in an execution of convolution operation using multiple processor groups in each of which the multiple processors are arranged in a two-dimensional array, the multiple virtual processors are arranged around the multiple real processors with focus data items are set in the multiple real processors and peripheral data items relative to the focus data items are set in the multiple virtual processors.

### (Aspect 5)

In the arithmetic device according to aspect 4, the real processor located at a corner of one processor group includes at least three moving circuits for performing the data movement between own real processor and three virtual processors, which include one virtual processor located in a diagonal direction relative to own real processor, and
the real processor located on a side of one processor group excluding the corner includes at least one moving circuit for performing the data movement between own real processor and one virtual processor.

### (Aspect 6)

In the arithmetic device according to aspect 4, the multiple real processors include one real processor that has eight moving circuits for performing the data movement between own real processor and eight virtual processors arranged in an upper direction, a lower direction, a left direction, a right direction, and diagonal directions relative to own real processor.

### (Aspect 7)

In the arithmetic devices according to any one of aspects 1 to 6, when the data items are input from an external memory (16) to the multiple real processors, the multiple real processors move the data items to the multiple virtual processors to have an order reverse to the arrangement order of the data items, and stores the data items in registers of the multiple processors.

### (Aspect 8)

In the arithmetic device according to aspect 7, the data items are input from the external memory to partial real processors, which are located in an end portion and an inner portion of the multiple real processors arranged in the two-dimensional array, and
the partial real processors each reverses the arrangement order of the data items input to the end portion and the inner portion of the multiple real processors, and moves the data items to the corresponding virtual processors in the order reverse to the arrangement order of the data items.

### (Aspect 9)

In the arithmetic device according to any one of aspects 1 to 8, the multiple real processors and the multiple virtual processors are logically arranged as a consecutive one-dimensional array, and one-dimensional data is arranged consecutively in the multiple real processors and the multiple virtual processors.

### (Aspect 10)

In the arithmetic device according to aspect 9, the multiple processors each alternately stores the one-dimensional data in forward order or in reverse order for each row or each column of the multiple processors arranged in the two-dimensional array.

### (Aspect 11)

In the arithmetic device according to any one of aspects 1 to 10, the multiple real processors and the multiple virtual processors each is configured to: arrange the data item, which is input, by dividing the data item into multiple data elements such that each data element has a predetermined number of bits, and move the multiple data elements, each of which is divided to have the predetermined number of bits, in units of data element.

### (Aspect 12)

In the arithmetic device according to aspect 11, the multiple processors each arranges the multiple data elements, which is generated by dividing one data item, in forward order or in reverse order with the bit positions alternating for each of the multiple processors arranged in the two-dimensional array.

### (Aspect 13)

A data movement method for an arithmetic device is provided. The arithmetic device includes multiple processors, and the multiple processors include multiple real processors and multiple virtual processors. The data movement method includes arranging the multiple virtual processors such that at least one of row arrangement or column arrangement is in reverse order relative to an arrangement of the multiple real processors; arranging data items consecutively in the multiple real processors and the multiple virtual processors; and performing a data movement in the multiple virtual processors in a direction different from a direction of data movement in the multiple real processors such that the data items are moved in an arrangement order in which the data items are arranged.

## Claims

1. An arithmetic device (10) comprising multiple processors (12), wherein
the multiple processors include multiple real processors and multiple virtual processors,
the multiple virtual processors (12B) are arranged such that at least one of row arrangement or column arrangement is in reverse order relative to an arrangement of the multiple real processors (12A),
data items are arranged consecutively in the multiple real processors and the multiple virtual processors, and
a data movement in the multiple virtual processors is performed in a direction different from a direction of data movement performed in the multiple real processors such that the data items are moved in an arrangement order in which the data items are arranged.

2. The arithmetic device according to claim 1, wherein
the data items to be moved from a register included in each of the multiple processors are set in the corresponding real processor and corresponding virtual processor.

3. The arithmetic device according to claim 1 or 2, further comprising
a first wiring (14A) for performing the data movement in the multiple real processors; and
a second wiring (14B) for performing the data movement in the multiple virtual processors,
wherein the second wiring performs the data movement in the direction different from the direction of data movement performed by the first wiring.

4. The arithmetic device according to claim 1 or 2, wherein,
in an execution of convolution operation using multiple processor groups in each of which the multiple processors are arranged in a two-dimensional array, the multiple virtual processors are arranged around the multiple real processors, focus data items are set in the multiple real processors, and peripheral data items relative to the focus data items are set in the multiple virtual processors.

5. The arithmetic device according to claim 4, wherein
the real processor located at a corner of one processor group includes at least three moving circuits for performing the data movement between own real processor and three virtual processors, which include one virtual processor located in a diagonal direction relative to own real processor, and
the real processor located on a side of one processor group excluding the corner includes at least one moving circuit for performing the data movement between own real processor and one virtual processor.

6. The arithmetic device according to claim 4, wherein
the multiple real processors include one real processor that has eight moving circuits for performing the data movement between own real processor and eight virtual processors arranged in an upper direction, a lower direction, a left direction, a right direction, and diagonal directions relative to own real processor.

7. The arithmetic device according to claim 1 or 2, wherein,
when the data items are input from an external memory (16) to the multiple real processors, the multiple real processors move the data items to the multiple virtual processors to have an order reverse to the arrangement order of the data items, and store the data items in registers of the multiple processors.

8. The arithmetic device according to claim 7, wherein
the data items are input from the external memory to partial real processors, which are located in an end portion and an inner portion of the multiple real processors arranged in a two-dimensional array, and
the partial real processors each reverses the arrangement order of the data items input to the end portion and the inner portion of the multiple real processors, and moves the data items to the corresponding virtual processors in the order reverse to the arrangement order of the data items.

9. The arithmetic device according to claim 1 or 2, wherein
the multiple real processors and the multiple virtual processors are logically arranged as a consecutive one-dimensional array, and
one-dimensional data items are arranged consecutively in the multiple real processors and the multiple virtual processors.

10. The arithmetic device according to claim 9, wherein
the multiple processors each stores the one-dimensional data item alternately in forward order or in reverse order for each row or each column of the multiple processors arranged in a two-dimensional array.

11. The arithmetic device according to claim 1 or 2, wherein
the multiple real processors and the multiple virtual processors each is configured to:
arrange each data item, which is input, by dividing each data item into multiple data elements such that each data element has a predetermined number of bits; and
move the multiple data elements, each of which is divided to have the predetermined number of bits, in units of data element.

12. The arithmetic device according to claim 11, wherein
the multiple processors each arranges the multiple data elements, which is generated by dividing one data item, in forward order or in reverse order with bit positions alternating for each of the multiple processors arranged in a two-dimensional array.

13. A data movement method for an arithmetic device, wherein the arithmetic device includes multiple processors, and the multiple processors include multiple real processors and multiple virtual processors, the data movement method comprising:
arranging the multiple virtual processors such that at least one of row arrangement or column arrangement is in reverse order relative to an arrangement of the multiple real processors;
arranging data items consecutively in the multiple real processors and the multiple virtual processors; and
performing a data movement in the multiple virtual processors in a direction different from a direction of data movement in the multiple real processors such that the data items are moved in an arrangement order in which the data items are arranged.
